# EUROPÄISCHE PATENTSCHRIFT

(11) **EP 1 014 174 B1**
(45) Veröffentlichungstag und Bekanntmachung des Hinweises auf die Patenterteilung: **28.12.2005**
(21) Anmeldenummer: 99125496.2
(22) Anmeldetag: 21.12.1999
(51) Int. Cl.: G03B 42/02, G01T 1/29

(54) **Vorrichtung und Verfahren zum Auslesen von Information aus Speicherfolien**
Device and method for reading information from stimulable phosphor sheets
Dispositif et procédé pour lire de l'information des feuilles en phosphore stimulable

(30) Priorität: 24.12.1998 DE 19860246
(43) Veröffentlichungstag der Anmeldung: 28.06.2000
(73) Patentinhaber: Agfa-Gevaert HealthCare GmbH, 51373 Leverkusen (DE)
(72) Erfinder: Müller, Jürgen, 81545 München (DE); Heike, Thomas, 81543 München (DE); Schneider, Rudolf, 85276 Pfaffenhofen (DE)

(56) Entgegenhaltungen:
- US-A- 4 816 676
- US-A- 5 265 865
- US-A- 5 530 259
- US-A- 5 665 976
- PATENT ABSTRACTS OF JAPAN vol. 013, no. 127 (P-848), 29. März 1989 (1989-03-29) & JP 63 298333 A (FUJI PHOTO FILM CO LTD), 6. Dezember 1988 (1988-12-06)
- PATENT ABSTRACTS OF JAPAN vol. 016, no. 058 (P-1311), 13. Februar 1992 (1992-02-13) & JP 03 256038 A (FUJI PHOTO FILM CO LTD), 14. November 1991 (1991-11-14)

## Beschreibung

Die Erfindung geht aus von einem Verfahren und einer Vorrichtung zum Auslesen von Informationen aus Speicherfolien nach dem Oberbegriff von Anspruch 1 bzw. Anspruch 4.

In der US-PS 5,665,976 ist eine Vorrichtung gezeigt, mit der stimulierbare Phosphorfolien ausgelesen und gelöscht werden können. Hierzu werden die Folien zuerst durch einen Scanner und im Anschluß durch eine Löschstation transporttiert. In der Löschstation wird die Folie mit Licht einer bestimmten Wellenlänge beaufschlagt, die den Scanvorgang nicht stört. Hat die Folie die Löschstation passiert, wird die Transportrichtung umgekehrt und die Folie ein zweites Mal durch die Löschstation bewegt. Bei diesem zweiten Löschvorgang kann Licht einer anderen Wellenlänge benutzt werden, da zu diesem Zeitpunkt der Scanvorgang bereits abgeschlossen ist.

Auch die US-PS 5,530,259 zeigt eine entsprechende Vorrichtung. Hier ist der Scanner so dicht hinter der Kassettenaufnahme montiert, daß die Phosphorfolie während des Scanbeginns noch in die Kassette ragt. Da die Position der Speicherfolie in der Kassette nicht eindeutig festgelegt ist, muß der Scanner so breit ausgelegt sein, daß die Folie in jeder möglichen Lage in ihrer gesamten Breite gescannt werden kann.

Die US 5,265,865 beschreibt eine Vorrichtung zum Auslesen von Speicherfolien mit einer Einrichtung zum Entnehmen und Rückführen einer Speicherfolie aus der bzw. in die Kassette. Hierzu sind Stifte vorgesehen, welche in in der Speicherschicht vorgesehene Löcher eingreifen. Durch eine entsprechende Bewegung der Stifte wird die Speicherfolie aus der Kassette entnommen bzw. in die Kassette rückgeführt. In Fätlen; in denen die Position der Locher der Speicherplatte nicht mit der Position der Stifte übereinstimmt, können letztere nicht in die Löcher der Speicherplatte eingreifen, so dass ein entsprechender Transport der Speicherplatte unmöglich ist.

Es war die Aufgabe der Erfindung, ein Verfahren und eine Vorrichtung zum Auslesen von Informationen aus Speicherfolien so auszugestalten, daß einerseits ein möglichst schmaler und damit preiswerter Scanner und andererseits eine möglichst kurze Transportstrecke für die Folien und somit auch eine möglichst kompakte Bauweise realisierbar ist.

Gelöst wird die Aufgabe durch ein Verfahren und eine Vorrichtung mit den Merkmalen von Anspruch 1 bzw. Anspruch 4. Erfindungsgemäß wird die Folie nicht wie bisher zuerst vollständig aus der Kassette heraustransportiert, sondern die Einrichtung zum Ausrichten der Phosphorfolie in Bezug auf den Scanner ist so nah an der Kassettenaufnahme angeordnet, daß die Folie ausgerichtet werden kann, während der Großteil der Folie sich noch innerhalb der Kassette befindet.

Auch der Scanner ist so nah an der Kassettenaufnahme angeordnet, daß die bereits ausgerichtete Folie mit ihrer Vorderkante dem Scanner zugeführt wird, während ihr hinteres Ende noch in die Kassette ragt. Gelöscht wird die Folie in an und für sich bekannter Weise bei dem Rücktransport in entgegengesetzter Richtung. Auch hier ist die Anordnung so getroffen, daß der Bereich der Folie, der die Kassette zuletzt verlassen hat, sich bereits wieder in der Kassette befindet, während der Bereich, der die Kassette zuerst verlassen hat, noch gelöscht wird.

Durch die spezielle Anordnung von Kassettenaufnahme, Einrichtung zum Ausrichten der Speicherfolie, Scanner und Löscheinrichtung benötigt die Vorrichtung für den Transport der Folien lediglich eine Übergabeeinrichtung, die die Folien der Kassette entnimmt und insgesamt zwei Transportwalzenpaare, die die Folien durch den Scanner und die Löscheinrichtung fördern.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigen:
- Fig. 1: die schematische Darstellung einer erfindungsgemäßen Vorrichtung und
- Fig. 2: eine Einrichtung zum Zentrieren und Ausrichten der Folie im Scanner.

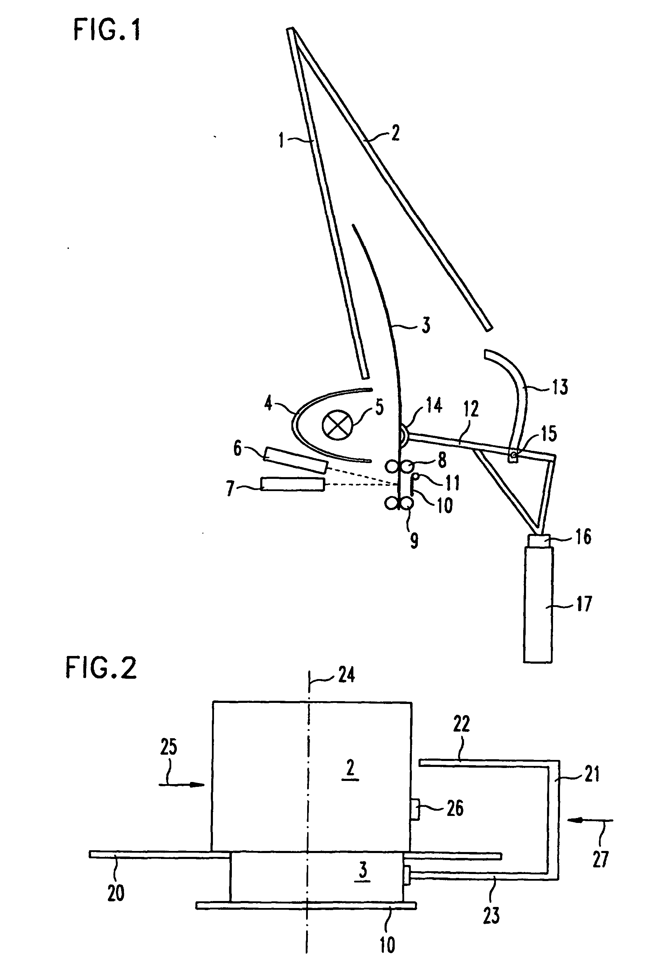

Eine Kassette zur Aufnahme einer Speicherfolie 3 besteht aus einem Bodenteil 1 und einem schwenkbar daran befestigten Deckelteil 2. Die Kassettenaufnahme 20 ist aus Übersichtlichkeitsgründen nur in Fig. 2 schematisch angedeutet. Sie weist eine Halte- und Transportvorrichtung für die Kassette 1, 2 auf, welche die Kassette in Richtung des Pfeiles 25 bis zu dem Anschlag 26 fördert.

Unterhalb der Kassettenaufnahme befindet sich eine Löscheinrichtung mit einer Löschlampe 5 und einem Reflektor 4. In Transportrichtung der Speicherfolie unterhalb der Löscheinrichtung schließen sich zwei Transportwalzenpaare 8 und 9 an, die beide in eine offene und eine geschlossene Stellung verfahren werden können. Eine Auflageleiste 10 für die Speicherfolie ist um den Drehpunkt 11 zwischen die Transportwalzenpaare 8 und 9 einschwenkbar.

Der Scanner 6, 7 liest die gespeicherten Informationen zwischen den Transportwalzenpaaren 8 und 9 aus. Eine Laserlichtquelle 6 regt hierzu die Speicherfolie punktweise zum Leuchten an, während die Leseeinrichtung 7 die leuchtenden Punkte erkennt und die gemessenen Werte an eine hier nicht gezeigte Bildverarbeitungseinrichtung weiterleitet.

Um die Speicherfolie 3 aus der Kassette 1, 2 zu entnehmen und in den Spalt des ersten Transportwalzenpaares 8 zu überführen, ist ein Sauger 14 vorgesehen, der an einem Gestänge 12 befestigt ist. Dieses Gestänge ist über einen Flansch 15 in einer Kulisse 13 verschiebbar. Die Verschiebung erfolgt über den Pneumatikzylinder 17 mit dem Kolben 16, der an dem Gestänge befestigt ist.

Die Einrichtung zum Zentrieren der Kassette 1, 2 und der Speicherfolie 3 (Fig. 2) weist einen Schieber 21 auf, der zwei unterschiedlich lange Schenkel 22 und 23 besitzt. Die Länge der beiden Schenkel ist so abgestimmt, daß dann, wenn Schenkel 22 an der Kassette 1, 2 und Schenkel 23 an der Speicherfolie 3 anliegen, diese Speicherfolie zur Kassette zentriert ausgerichtet ist und somit die vertikalen Mittellinien von Speicherfolie und Kassette in Deckung sind.

Wird nun eine Kassette mit einer zum Auslesen bestimmten Speicherfolie der Vorrichtung zugeführt, so wird die Kassette in Richtung des Pfeiles 25 gefördert, bis sie an dem Anschlag 26 anstößt. Der Anschlag ist so angebracht, daß die Kassette mit ihrer vertikalen Mittellinie über die Mittellinie 24 des Scanners hinausgeschoben ist. Auch die mit seitlichem Spiel in der Kassette liegende Speicherfolie 3 befindet sich bei dieser Kassettenlage in jedem Fall mit ihrer vertikalen Mittellinie rechts von der Mittellinie 24 des Scanners (s. Fig. 2). Die Kassette wird nun durch einen hier nicht gezeigten aber an und für sich bekannten Mechanismus geöffnet. Als Beispiel sei hier das Herunterdrücken der Kassette auf zwei Öffnungsdorne genannt, die dann den Schließmechanismus der Kassette betätigten.

Nun wird der Kolben 16 des Pneumatikzylinders 17 ausgefahren, so daß sich der Flansch 15 in der Kulisse 13 nach oben bewegt. In seiner oberen Endstellung wird der Sauger 14 an dem Gestänge 12 auf die Speicherfolie 3 gedrückt und über eine entsprechende Einrichtung ein Vakuum aufgebaut. Daraufhin bewegt sich der Sauger 14 über den Pneumatikantrieb 16, 17 in seine untere Endstellung zurück. Das Transportwalzenpaar 8 ist in seine offene Stellung verfahren und die Leiste 10 eingeschwenkt, so daß die Vorderkante der Speicherfolie 3 auf dieser Leiste zu liegen kommt. Die nun von dem Sauger 14 abgelegte Speicherfolie ist damit auf der Leiste 10 seitlich frei verschiebbar.

Nun wird der Schieber 21 in Richtung des Pfeiles 27 bewegt und sowohl Kassette als auch Speicherfolie so weit verschoben, bis sich die vertikalen Mittellinien von Speicherfolie und Kassette mit der Mittellinie 24 des Scanners decken. Damit ist die Folie zum Scanner zentriert positioniert. Nun wird das Transportwalzenpaar 8 geschlossen und die Leiste 10 ausgeschwenkt. Der Scanvorgang startet, in dem das Transportwalzenpaar 8 beginnt, die Speicherfolie in den offenen Spalt des Transportwalzenpaares 9 zu fördern. Während sich nun langsam das Transportwalzenpaar 9 in seine geschlossene Stellung bewegt, wird ebenso langsam das Transportwalzenpaar 8 geöffnet, so daß die Speicherfolie 3 praktisch nur immer durch ein Transportwalzenpaar gefördert wird. Der Übergang von dem Eingriff des Transportwalzenpaares 8 auf das Transportwalzenpaar 9 erfolgt ruckfrei.

Die gesamte Speicherfolie 3 wird auf diese Weise durch den Scanner gefördert, ohne daß ein weiteres Transportwalzenpaar notwendig wäre. Am Ende des Scanvorgangs stoppt das Transportwalzenpaar 9 und hält den hinteren Rand der Speicherfolie 3 fest. Nun wird die Löschlampe 5 eingeschaltet und das Transportwalzenpaar 9 fördert die Speicherfolie in entgegengesetzter Richtung mit erhöhter Geschwindigkeit in die Kassette zurück. Auch bei diesem Rücktransport bei aktivierter Löscheinrichtung wird, wie vorher beschrieben, die Transportfunktion wieder von dem einen auf das andere Transportwalzenpaar übergeben. Während also das Transportwalzenpaar 8 in die geschlossene Stellung bewegt wird, öffnet sich langsam das Transportwalzenpaar 9.

Befindet sich nur noch der vordere Rand der Speicherfolie zwischen dem Transportwalzenpaar 8, so wird dieses angehalten, die Leiste 10 wieder eingeschwenkt und die Transportwalzen in die geöffnete Stellung verfahren.

Über hier nicht gezeigte Sensoren kann nun festgestellt werden, ob die Folie 3 sich noch in einer zur Kassette zentrierten Lage befindet. Alternativ ist es jedoch auch möglich, den Schieber 21 ein zweites Mal in Richtung des Pfeiles 27 zu betätigen, so daß sowohl Kassette als auch Folie um eine geringe Distanz verschoben werden. Dabei wird die Folie dann wieder in die richtige Lage zur Kassette gebracht.

Nun wird wieder der Sauger 14 aktiviert, der die Speicherfolie 3 aus dem geöffneten Spalt des Transportwalzenpaares 8 entnimmt und in der Kassette 1, 2 ablegt. Der Deckel 2 wird daraufhin geschlossen und die Kassette entgegen der Richtung des Pfeiles 25 zur Ausgabe gefördert.

## Patentansprüche

1. Verfahren zum Auslesen von Informationen aus Speicherfolien(3), die sich in einer Kassette (1,2) befinden, wobei die Speicherfolie (3) der Kassette (1,2) entnommen, die Information ausgelesen, die Information gelöscht und die Speicherfolie (3) wieder in die Kassette (1,2) zurückgeführt wird, **dadurch gekennzeichnet, daß** (3) die Speicherfolie (3) durch ein seittiches Verschieben sowohl der Kassette (1,2) als auch der Speicherfolie (3) für den Auslesevorgang ausgerichtet wird, während ein hinteres Ende der Speicherfolie sich noch innerhalb der Kassette (1,2) befindet und die Speicherfolie (3) somit noch nicht vollständig aus der Kassette (1,2) entnommen wurde.

2. Verfahren nach Anspruch 1, **dadurch gekennzeichnet, daß** das Auslesen der Information an dem vorderen Rand der Speicherfolie (3) begonnen wird wenn das hintere Ende der Speicherfolie (3) noch in die Kassette (1,2) ragt.

3. Verfahren nach Anspruch 1, **dadurch gekennzeichnet, daß** das hintere Ende der Speicherfolie (3) bereits in die Kassette (1,2) ragt, wenn der vordere Rand der Speicherfolie (3) gelöscht wird.

4. Vorrichtung zum Auslesen von Informationen aus Speicherfolien(3), die in einer Kassette (1,2) der Vorrichtung zugeführt werden, mit einer Kassettenaufnahme (20), Mitteln zum Öffnen der Kassette (1,2), einem Scanner (6,7) zum Auslesen der gespeicherten Informationen und einer Löscheinrichtung (4,5) zum Löschen der gespeicherten Informationen, **dadurch gekennzeichnet, daß** eine Einrichtung (21-23) zum seitlichen Ausrichten der Speicherfolie(3) für den Auslesevorgang vorgesehen ist, deren Abstand zur Kassettenaufnahme kleiner als die Länge der Speicherfolie(3) ist, wobei die Einrichtung (21-23) zum Ausrichten der Speicherfolie (3) eine Verschiebeeinrichtung (21-23) umfasst, welche sowohl die Kassette (1, 2) als auch die nicht vollständig entnommene Speicherfolie (3) verschieben kann, wodurch ein Ausrichten der Speicherfolie (3) für den Auslesevorgang erfolgen kann, während ein hinteres Ende der Speicherfolie (3) sich noch innerhalb der Kassette (1,2) befindet.

5. Vorrichtung nach Anspruch 4, **dadurch gekennzeichnet, daß** der Scanner (6,7) je ein Transportwalzenpaar (8,9) vor und nach einem Scanspalt aufweist.

6. Vorrichtung nach Anspruch 5, **dadurch gekennzeichnet, daß** eine Übergabeeinrichtung (12-17) vorgesehen ist, die die Speicherfolie (3) der Kassette (1,2) entnimmt und an das Transportwalzenpaar (8) vor dem Scanspalt übergibt.

7. Vorrichtung nach Anspruch 5, **dadurch gekennzeichnet, daß** die Transportwalzenpaare (8,9) in entgegengesetzte Richtungen mit unterschiedlicher Geschwindigkeit betreibbar sind.

8. Vorrichtung nach Anspruch 5, **dadurch gekennzeichnet, daß** die Transportwalzenpaare (8,9) in eine geöffnete und eine geschlossene Stellung bewegbar sind.

9. Vorrichtung nach einem der Ansprüche 4 bis 8, **dadurch gekennzeichnet, daß** die Verschiebeeinrichtung (21-23) zwei unterschiedlich lange, parallele Schieber (22,23) für Speicherfolie (3) und Kassette (1,2) aufweist.

## Claims

1. A method for reading out information from storage films (3) which are located in a cassette (1,2), wherein the storage film (3) is removed from the cassette (1,2), the information is read out, the information is erased, and the storage film (3) is conveyed back into the cassette (1, 2), **characterised in that** the storage film (3) is aligned for the read-out process by a sideways movement both of the cassette (1,2) and the storage film (3), while a rear end of the storage film is still located within the cassette (1,2), and the storage film (3) has therefore not yet been fully removed from the cassette (1,2).

2. The method according to claim 1, **characterised in that** the read-out of the information is begun at the front edge of the storage film (3) when the rear end of the storage film (3) is still projecting into the cassette (1,2).

3. The method according to claim 1, **characterised in that** the rear end of the storage film (3) already projects into the cassette (1,2) when the front edge of the storage film (3) is erased.

4. A device for reading out information from storage films (3) which are conveyed into a cassette (1,2) of the device comprising a cassette holder (20), means for opening the cassette (1,2), a scanner (6,7) for reading out the stored information, and an erasing device (4,5) for erasing the stored information, **characterised in that** a device (21-23) is provided for the sideways alignment of the storage film (3) for the read-out process, the distance of which from the cassette holder is less than the length of the storage film (3), wherein the device (21-23) for aligning the storage film (3) comprises a moving device (21-23) which can move both the cassette (1,2) and the non-fully removed storage film (3) by means of which alignment of the storage film (3) for the read-out process can take place while a rear end of the storage foil (3) is still located within the cassette (1,2).

5. The device according to claim 4, **characterised in that** the scanner (6,7) has a conveyance mating roll (8,9) before and after a scanning gap respectively.

6. The device according to claim 5, **characterised in that** a transfer device (12-17) is provided which removes the storage film (3) from the cassette (1,2) and transfers it to the conveyance mating roll (8) before the scanning gap.

7. The device according to claim 5, **characterised in that** the conveyance mating rolls (8,9) can be operated in opposite directions at different speeds.

8. The device according to claim 5, **characterised in that** the conveyance mating rolls (8,9) can be moved into an open and a closed position.

9. The device according to any of claims 4 to 8, **characterised in that** the moving device (21-23) has two parallel slides (22,23) of different lengths for the storage film (3) and the cassette (1,2).

## Revendications

1. Procédé destiné à la lecture d'informations à partir de films de mémorisation (3) contenus dans une cassette (1, 2), dans lequel le film de mémorisation (3) est prélevé de la cassette (1, 2), l'information est lue, l'information est effacée et le film de mémorisation (3) est à nouveau ramené dans la cassette (1, 2), **caractérisé en ce que** le film de mémorisation (3) est orienté pour le processus de lecture par un déplacement latéral, aussi bien de la cassette (1, 2) que du film de mémorisation (3), pendant qu'une extrémité arrière du film de mémorisation se trouve encore à l'intérieur de la cassette (1, 2) et que le film de mémorisation (3) n'a par conséquent pas encore été entièrement prélevé de la cassette (1, 2).

2. Procédé selon la revendication 1, **caractérisé en ce que** la lecture de l'information commence au niveau du bord avant du film de mémorisation (3) lorsque l'extrémité arrière du film de mémorisation (3) se trouve encore dans la cassette (1, 2).

3. Procédé selon la revendication 1, **caractérisé en ce que** l'extrémité arrière du film de mémorisation (3) pénètre déjà dans la cassette (1, 2) lorsque le bord avant du film de mémorisation (3) est en cours d'effacement.

4. Dispositif destiné à la lecture d'informations à partir de films de mémorisation (3) qui sont amenés au dispositif dans une cassette (1, 2), comportant une réception (20) de cassette, des moyens pour l'ouverture de la cassette (1, 2), un scanneur (6, 7) pour la lecture des informations mémorisées et un système d'effacement (4, 5) pour l'effacement des informations mémorisées, **caractérisé en ce qu'**il est prévu un dispositif (21 à 23) destiné à l'orientation latérale du film de mémorisation (3) pour le processus de lecture, dont l'écartement par rapport à la réception de cassette est inférieur à la longueur du film de mémorisation (3), le dispositif (21 à 23) pour l'orientation du film de mémorisation (3) comportant un système de déplacement (21 à 23) qui peut déplacer, aussi bien la cassette (1, 2) que le film de mémorisation (3) non entièrement prélevé, ce qui permet d'orienter le film de mémorisation (3) pour le processus de lecture, alors qu'une extrémité arrière du film de mémorisation (3) se trouve encore à l'intérieur de là cassette (1, 2).

5. Dispositif selon la revendication 4, **caractérisé en ce que** le scanneur (6, 7) comporte un couple de galets de transport (8, 9) respectif en amont et en aval d'une emprise de scannage.

6. Dispositif selon la revendication 5, **caractérisé en ce qu'**il est prévu un dispositif de transfert (12 à 17), qui prélève le film de mémorisation (3) de la cassette (1, 2) et le transfère au couple de galets de transport (8) placé en amont de l'emprise de scannage.

7. Dispositif selon la revendication 5, **caractérisé en ce que** les couples de galets de transport (8, 9) peuvent fonctionner à différentes vitesses dans des sens opposés.

8. Dispositif selon la revendication 5, **caractérisé en ce que** les couples de galets de transport (8, 9) peuvent être déplacés dans une position ouverte et dans une position fermée.

9. Dispositif selon l'une des revendications 4 à 8, **caractérisé en ce que** le système de déplacement (21 à 23) comporte deux registres parallèles (22, 23) de différentes longueurs pour le film de mémorisation (3) et la cassette (1, 2).
